# EUROPEAN PATENT SPECIFICATION

(11) **EP 1 455 222 B1**
(45) Date of publication and mention of the grant of the patent: **15.03.2006**
(21) Application number: 03257416.2
(22) Date of filing: 25.11.2003
(51) Int. Cl.: G03B 17/56, A44B 11/12, F16M 11/04

(54) **Device for securing a video camera on a tripod**
Vorrichtung zum Befestigen von Videoameras auf einem Stativ
Dispositif de fixation de vidéo caméras sur un trépied

(30) Priority: 05.03.2003 US 382337
(43) Date of publication of application: 08.09.2004
(73) Proprietor: Videopart, Inc., Tapei City, Taiwan, R.O.C. (TW)
(72) Inventor: Ma, Chan-Min, Tapei City Taiwan, R.O.C. (TW)
(74) Representative: Nicholls, Michael John

(56) References cited:
- EP-A- 0 699 593
- DE-A- 2 821 442
- DE-A- 3 017 371
- GB-A- 2 148 436
- US-A- 5 738 256
- PATENT ABSTRACTS OF JAPAN vol. 017, no. 630 (E-1463), 22 November 1993 (1993-11-22) -& JP 05 199440 A (HITACHI LTD;OTHERS: 01), 6 August 1993 (1993-08-06)

## Description

The invention relates to a device for securing a video camera, especially a video camera for professional use, onto a tripod. More particularly, the invention relates to a device for tightening a professional video camera on a base plate of a tripod so that the video camera can be better mounted firmly on the tripod.

Video cameras are usually mounted on a tripod for stable manipulation and accordingly obtains good quality of video. Video cameras, particularly the ones used professional, are mounted on a tripod by way of a base plate. The base plate, mostly provided by the video camera supplier, serves as an adaptor for the video camera so that the camera can quickly and easily mount on and release from a tripod. When a video camera is to be mounted on a tripod, the base plate first joins the tripod, and then the video camera mounts on the base plate. Alternatively, the base plate can join the video camera before mounting on the tripod.

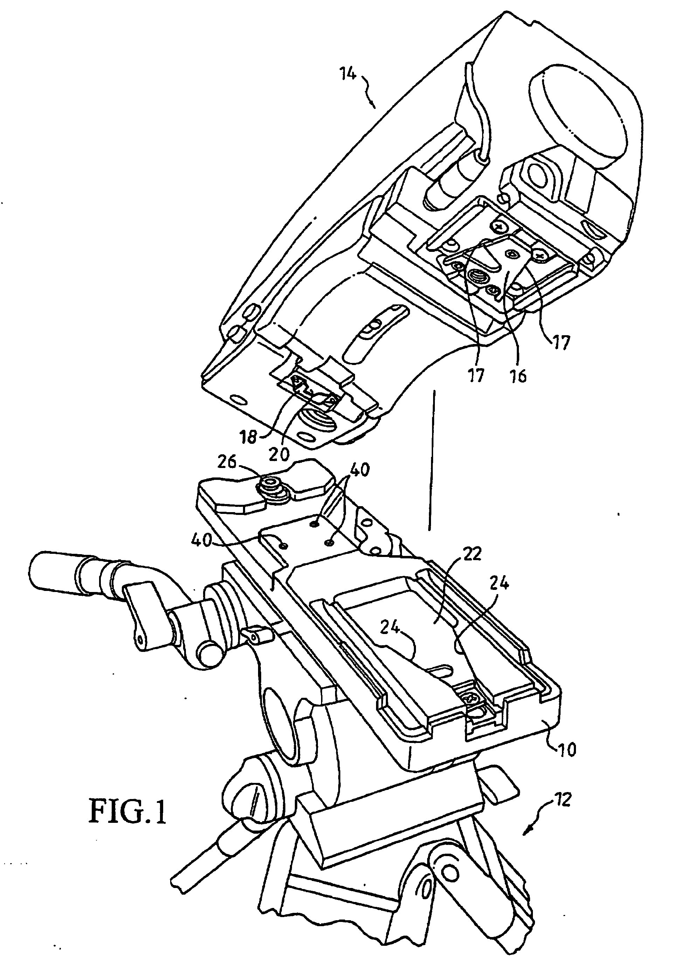

As shown in Fig. 1, the base plate 10 illustrated has already been mounted on a tripod 12.

The bottom of the video camera 14 includes a truncated triangle plate 16 with both sides each formed with a slope surface 17 and a U-shaped plate 18 with an indentation 20.

The base plate 10 has a recess 22 with a dovetailed guide 24 at each of its two sides so that the truncated triangle plate 16 can slide to engage the dovetailed guide 24.

The U-shaped plate 18 and a headed pin 26 serves as an auxiliary attachment force to engage the truncated triangle plate 16 with the dove-tailed guide 24, in which the headed pin 26 slidably inserts into the gap formed between the U-shaped plate 18 and the bottom surface of the video camera 14.

In some particular situations, a video camera is required to tilt at a large angle for shooting video from a better angle. The current design of the engagement between the video camera 14 and the base plate 10 may not be secure enough to support the weight of the camera on the tripod under this situation, particularly when a worn-away has been created between the parts of base plate 10 and the camera 14 when they engage each other after the camera 14 is repeatedly mounted on and unmounted from the base plate 10.

For many professionals, at least once in their career, a camera might happen to fall off a tripod such as by crushing could. Anything like this is devastating, as the value of the camera is usually not affordable. Moreover, the tape loaded on the camera would possibly be damaged.

Furthermore, if a clearance is generated between the camera and the base plate, the camera would be unstable when mounted on a tripod.

Therefore, a device for securing the camera on tripod is needed to overcome the foregoing problems without modifying the current design between the engagement of the camera and the base plate.

The present invention is directed to a device that satisfies the need of fastening a video camera on a tripod securely.

The device comprises a seat, a tightening means, locking device, and a strap. The seat is made to adapt to the profile of the bottom portion of a video camera and is fastened to the base plate associated with the camera. The strap is used to tie a camera on the tripod. The tightening means comprises a ratchet mechanism so that it can wind up the strap in order to tighten a camera on a tripod, or more precisely, on a base plate of a camera.

With the device as described above, the video camera mounted on a tripod by way of a base plate provided by the video camera supplier can be securely fastened onto the tripod without the disadvantage of instability caused by the worn-away between the engagement parts of the base plate and the camera. Furthermore, the risk of the camera falling off a tripod in critical conditions, such as when a camera is tilted from a tripod, can be effectively avoided.

These and other modifications and advantages will become even more apparent from the following detained description of a preferred embodiment of the invention and from the drawings in which:
Fig. 1 shows the bottom of a video camera and a base plate mounted on a tripod;
Fig. 2 shows the device according to the present invention in the condition where the strap of the device is tightened so as to secure the video camera on the tripod;
Fig. 3 shows a perspective view of the device according to the present invention; and
Fig. 4 shows the device according to the present invention in a process of tightening the strap,

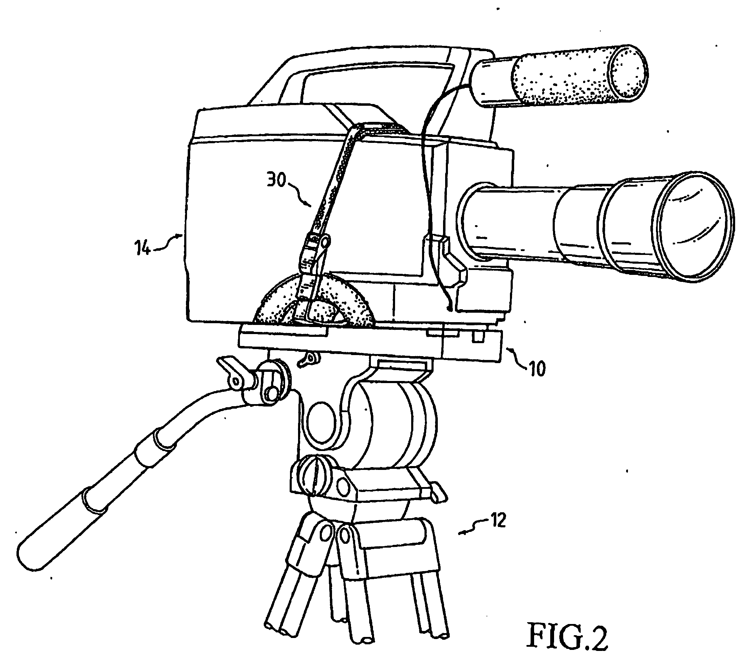

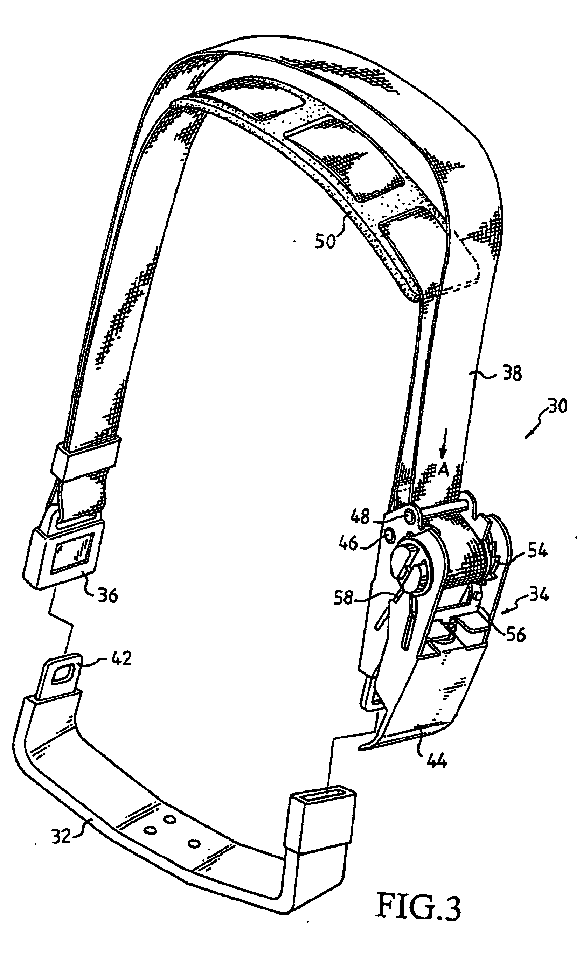

Referring to Fig. 2, the device for securing a video camera 14 onto a tripod is designated by the numeral 30. Details of the device 30 are shown in Fig. 3. The device 30 primarily includes: a seat 32, a tightening means 34, locking device 36, and a strap 38.

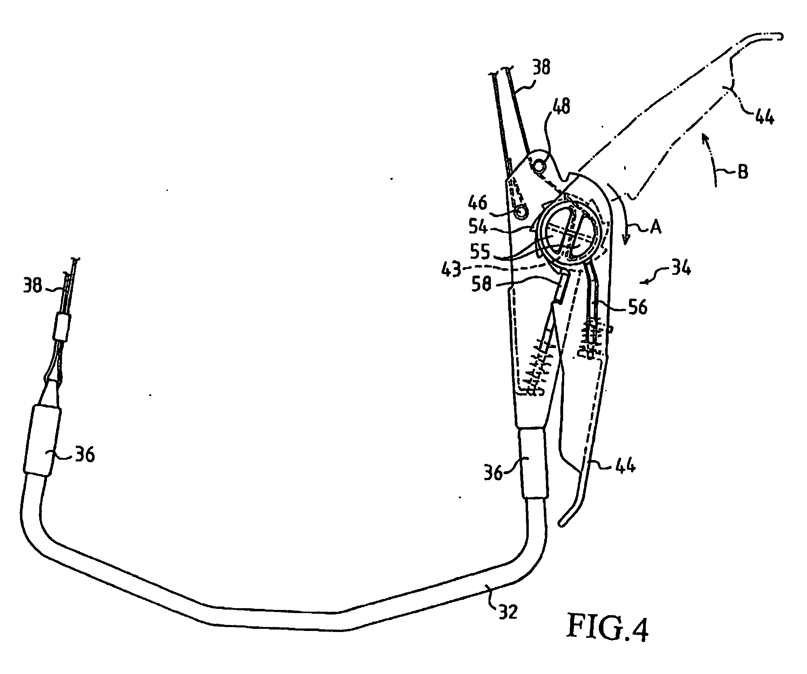

The seat 32 is generally made to adapt to the profile of the bottom of a video camera 14 and is fastened to the base plate 10 by way of screws. It should be noted that base plate 10 provided by the supplier of the video camera has already included screw holes 40 (Fig. 1) which have become standards for individual base plate supplier. The seat 32 may contain the same number of holes to properly fasten it to the base plate 10 by way of screws. The seat 32 is generally in a U-shape fashion with each of its ends provided with a locking means 42, such as a conventional latch or a conventional latch release. The tightening means 34 shown in Fig. 3 can be made by modifying a tightening device available on the market. The mechanism of the tightening means 34 is shown in Fig. 4. The available tightening device is modified so that it can be releasably connected to one end of the seat 32, and includes a first pin 46 and a second pin 48 for guiding the strap 38. The second pin 48 is located parallel to and outwardly from the first pin 46.

The tightening means 34 primarily includes two symmetrically arranged ratchets 54, through which an axel 55 with an axial slot 43 is provided, and two releasable pawls 56, 58 urged by two springs impede the ratchets 54 from rotating in an opposing direction. As such, the ratchet 54 can only be driven unidirectionally by swiveling an arm 44 of the tightening means 34 in a tightening direction, shown by arrow A in Fig. 4. On the other hand, the ratchet 54 as well as the axle 55 is allowed to rotate in an opposing direction by swiveling the arm 44 in a releasing direction, shown by arrow B in Fig. 4, once the releasable pawls 56, 58 are relieved from their impeding positions, shown in Fig. 4, by pulling the releasable pawls 56, 58 downward.

In this embodiment, a latch is provided at one end of the tightening means 34 to allow releasable connection with an end of the seat 32 provided with a latch release.

The strap 38 has two ends, one of which is fixed to the first pin 46, for example, by winding the end around the first pin 46 and seaming the end to the strap as shown in Figs. 3 and 4. The other end of the strap 38 passes through the locking device 36 and back to be inserted and fixed into the axial slot 43 of the axle 55 in the tightening means 34. Preferably, the other end of the strap 28 winds inwardly and partially around the second pin 48 before inserting into the axial slot 43 of the axle 55, such that the second pin 48 provided in the tightening means 34 contacts the strap 38. Preferably, the strap 38 is provided with a pad 50 at the location contacting the video camera when the video camera is in place, to provide increased frictional force between the strap 38 and the video camera.

The provisions of the locking means 42 and locking device 36 may be interchanged. For example, the locking means 42 may be a latch release while the locking device 36 may be a latch or *vice versa,* so long as the two locking means and locking device can properly mate and lock to one another.

In operation, the seat 32 is fastened to the base plate 10 before the video camera slides to lock onto the base plate 10. As shown in Fig. 3, the locking device 36 and the latch on the tightening means 34 are each locked onto the mating ends of the seat 32 with the video camera being omitted in the drawing. Rotatably swiveling the arm 44 of the tightening means 34 will rotate the ratchet 54 as well as the axle 55, and accordingly pull the strap 38 in the direction shown by the arrow A. Due to the provisions of the ratchet 54 and the spring-biased releasable pawls 56, 58, the axle 55 can only be rotated in one direction, matching the direction of A, but cannot be rotated in a reverse direction. Therefore, the strap 38 can be pulled as tight as possible by repeatedly swiveling the arm 44 until the camera is securely fastened onto the tripod.

If the camera is to be unmounted, only the pawls 56, 58 need to be pulled downwardly. In this condition, the ratchet 54 as well as the axle 55 can rotate in a direction opposite to direction A by swiveling the arm 44 in the releasing direction, shown by arrow B in Fig. 4.

It will thus be seen that the invention efficiently attains the objects set forth above, among those made apparent from the preceding description. Since certain changes may be made in the above constructions without departing from the scope of the invention, all matter contained in the above description or shown in the accompanying drawings are intended to be interpreted as illustrative and not in a limiting sense.

## Claims

1. A device for securing a video camera (14) having a bottom profile onto a tripod having a base plate, comprising: the video camera (14), having two
a seat (32) adapted to the bottom profile of the video camera (14), and having two ends and a fastening means (40) to fasten the seat onto the base plate;
a tightening means (34), including a ratchet (54) centrally fixed with an axle (55) having an axial slot (43) and an arm (44) to rotatably drive said ratchet (54) between a tightening direction (A) and a releasing direction (B) and the tightening means (34) provided at one end of the seat (32);
a locking device (36) to releasably connect the other end of the seat (32);
a strap (38), having an end fixed to the tightening means (34) and the other end passing through the locking device (36) and back to be inserted and fixed into the axial slot (43) of the axle (55).

2. The device for securing a video camera according to Claim 1, wherein the fastening means of the seat includes holes (40) formed in correspondence to the size and position of screwed holes of the base plate.

3. The device for securing a video camera according to Claim 1 or 2, wherein one end of the seat is connected to the locking device by a latch.

4. The device for securing a video camera according to Claim 3, wherein the other end of the seat is connected to the tightening means by a latch release.

5. The device for securing a video camera according to Claim 1, 2, 3 or 4, wherein the seat is generally a U-shaped plate.

6. The device for securing a video camera according to any one of claims 1 to 5, wherein the tightening means is provided with a first pin (46) to fix the strap.

7. The device for securing a video camera according to Claim 6, wherein one end of the strap winds around the first pin of the fastening means and the other end seamed on the strap.

8. The device for securing a video camera according to Claim 7, wherein the fastening means is provided with a second pin (48) located parallel to and outwardly from the first pin.

9. The device for securing a video camera according to Claim 8, wherein the strap winds inwardly and partially around the second pin before inserting into the axial slot of the axle.

10. The device for securing a video camera according to any one of the preceding claims, wherein the ratchet of the fastening means is oriented in a way such that only when the arm of the fastening means swivels in the tightening direction, the ratchet as well as the axel will rotate.

11. The device for securing a video camera according to Claim 10, wherein the tightening means further includes two spring-biased releasable pawls (56,58) to impede the ratchets from rotating in an opposing direction when the ratchet is swiveled in a releasing direction.

12. The device for securing a video camera according to any one of the preceding claims, wherein the strap is provided with a pad (50) to provide increased frictional force between the strap and the video camera.

## Patentansprüche

1. Vorrichtung zum Sichem einer Videokamera (14) mit einem Bodenprofil auf einem Dreibein mit einer Basisplatte, umfassend:
einen Sitz (32), welcher an das Bodenprofil der Videokamera (14) angepaßt ist, und zwei Enden und ein Befestigungsmittel (40) besitzt, um den Sitz an die Basisplatte zu befestigen;
ein Spannmittel (34), welches ein Klinkenrad aufweist, das mittig an einer Achse (55) mit einem Axialschlitz (43) fixiert ist, und einen Arm (44) aufweist, um das Klinkenrad (54) zwischen einer Spannrichtung (A) und einer Freigaberichtung (B) drehbar anzutreiben, wobei das Spannmittel (34) an einem Ende des Sitzes (32) vorgesehen ist;
eine Verriegelungsvorrichtung (36), um das andere Ende des Sitzes (32) lösbar zu verbinden;
einen Riemen (38), welcher ein Ende besitzt, welches mit dem Spannmittel (34) fixiert ist, und wobei das andere Ende durch die Verriegelungsvorrichtung (36) passiert und zurückgeführt wird, um in den Axialschlitz (43) der Achse (55) eingesetzt und fixiert zu werden.

2. Vorrichtung zum Sichern einer Videokamera nach Anspruch 1, wobei das Befestigungsmittel des Sitzes Löcher (40) aufweist, welche entsprechend der Größe und Position der mit einem Gewinde versehenen Löcher der Basisplatte ausgebildet sind.

3. Vorrichtung zum Sichern einer Videokamera nach Anspruch 1 oder 2, wobei ein Ende des Sitzes mit der Verriegelungsvorrichtung durch eine Klinke verbunden ist.

4. Vorrichtung zum Sichem einer Videokamera nach Anspruch 3, wobei das andere Ende des Sitzes mit dem Spannmittel durch eine Klinkenfreigabe verbunden ist.

5. Vorrichtung zum Sichem einer Videokamera nach Anspruch 1, 2, 3 oder 4, wobei der Sitz allgemein eine U-förmige Platte ist.

6. Vorrichtung zum Sichern einer Videokamera nach einem der Ansprüche 1 bis 5, wobei das Spannmittel mit einem ersten Stift (46) versehen ist, um den Riemen zu fixieren.

7. Vorrichtung zum Sichem einer Videokamera nach Anspruch 6, wobei ein Ende des Riemens um den ersten Stift des Befestigungsmittels umläuft und das andere Ende mit dem Riemen vernäht ist.

8. Vorrichtung zum Sichern einer Videokamera nach Anspruch 7, wobei das Befestigungsmittel mit einem zweiten Stift (48) versehen ist, der parallel zu dem ersten Stift und außerhalb des ersten Stiftes angeordnet ist.

9. Vorrichtung zum Sichem einer Videokamera nach Anspruch 8, wobei der Riemen zur Innenseite und teilweise um den zweiten Stift umläuft, bevor er in dem Axialschlitz der Achse eingesetzt ist.

10. Vorrichtung zum Sichem einer Videokamera nach einem der vorherigen Ansprüche, wobei das Klinkenrad des Befestigungsmittels in einer Weise orientiert ist, daß nur dann, wenn der Arm des Befestigungsmittels in die Spannrichtung geschwenkt wird, das Klinkenrad und auch die Achse gedreht werden.

11. Vorrichtung zum Sichem einer Videokamera nach Anspruch 10, wobei das Spannmittel femer zwei fedemd vorgespannte lösbare Sperrklinken (56, 58) aufweist, um die Klinkenräder daran zu hindern, gegen eine entgegengesetzte Richtung zu drehen, wenn das Klinkenrad in eine Freigaberichtung geschwenkt wird.

12. Vorrichtung zum Sichern einer Videokamera nach einem der vorhergehenden Ansprüche, wobei der Riemen mit einem Polster (50) versehen ist, um eine erhöhte Reibkraft zwischen dem Riemen und der Videokamera zu schaffen.

## Revendications

1. Dispositif pour fixer une caméra vidéo (14) ayant un profil inférieur sur un trépied ayant une plaque de base, comportant :
un siège (32) adapté au profil inférieur de la caméra vidéo (14), et ayant deux extrémités et des moyens de fixation (40) pour fixer le siège sur la plaque de base;
des moyens de serrage (34) incluant une roue à rochet (54) fixée au centre à l'aide d'un axe (55) ayant une fente axiale (43) et un bras (44) pour entraîner en rotation ladite roue à rochet (54) entre une direction de serrage (A) et une direction de détachement (B), et les moyens de serrage (34) étant prévus à une extrémité du siège (32);
un dispositif de verrouillage (36) pour connecter de manière détachable l'autre extrémité du siège (32);
une sangle (38) ayant une extrémité fixée aux moyens de serrage (34) et l'autre extrémité passant à travers le dispositif de verrouillage (36) et revenant en arrière pour être insérée et fixée dans la fente axiale (43) de l'axe (55).

2. Dispositif pour fixer une caméra vidéo selon la revendication 1, dans lequel les moyens de fixation du siège comportent des trous (40) formés en correspondance avec la taille et la position de trous filetés de la plaque de base.

3. Dispositif pour fixer une caméra vidéo selon la revendication 1 ou 2, dans lequel une extrémité du siège est connectée au dispositif de verrouillage par un loquet.

4. Dispositif pour fixer une caméra vidéo selon la revendication 3, dans lequel l'autre extrémité du siège est connectée aux moyens de serrage par un dispositif de détachement de loquet.

5. Dispositif pour fixer une caméra vidéo selon la revendication 1, 2, 3 ou 4, dans lequel le siège est généralement une plaque en forme de U.

6. Dispositif pour fixer une caméra vidéo selon l'une quelconque des revendications 1 à 5, dans lequel les moyens de serrage sont munis d'une première broche (46) pour fixer la sangle.

7. Dispositif pour fixer une caméra vidéo selon la revendication 6, dans lequel une extrémité de la sangle s'enroule autour de la première broche des moyens de fixation et l'autre extrémité est cousue sur la sangle.

8. Dispositif pour fixer une caméra vidéo selon la revendication 7, dans lequel les moyens de fixation sont munis d'une seconde broche (48) placée parallèlement à la première broche et vers l'extérieur par rapport à celle-ci.

9. Dispositif pour fixer une caméra vidéo selon la revendication 8, dans lequel la sangle s'enroule vers l'intérieur et partiellement autour de la seconde broche avant insertion dans la fente axiale de l'axe.

10. Dispositif pour fixer une caméra vidéo selon l'une quelconque des revendications précédentes, dans lequel la roue à rochet des moyens de fixation est orientée d'une manière telle que, seulement lorsque le bras des moyens de fixation pivote dans la direction de serrage, la roue à rochet de même que l'axe tourneront.

11. Dispositif pour fixer une caméra vidéo selon la revendication 10, dans lequel les moyens de serrage comportent en outre deux cliquets détachables rappelés par ressort (56, 58) pour empêcher les roues à rochet de tourner dans une direction opposée lorsque la roue à rochet est pivotée dans une direction de détachement.

12. Dispositif pour fixer une caméra vidéo selon l'une quelconque des revendications précédentes, dans lequel la sangle est munie d'un patin (50) pour fournir une force de frottement accrue entre la sangle et la caméra vidéo.
